(19) **Europäisches Patentamt / European Patent Office / Office européen des brevets**

(11) **EP 3 780 190 B1**

(12) **EUROPEAN PATENT SPECIFICATION**

(45) Date of publication and mention
of the grant of the patent:
**30.07.2025 Bulletin 2025/31**

(21) Application number: **20740821.2**

(22) Date of filing: **16.01.2020**

(51) International Patent Classification (IPC):
*H01M 4/62* (2006.01)   *H01M 4/13* (2010.01)
*H01M 4/139* (2010.01)   *H01M 4/04* (2006.01)
*H01M 10/052* (2010.01)

(52) Cooperative Patent Classification (CPC):
**H01M 4/622; H01M 4/13; H01M 4/139;
H01M 4/624;** Y02E 60/10

(86) International application number:
**PCT/KR2020/000801**

(87) International publication number:
**WO 2020/149665 (23.07.2020 Gazette 2020/30)**

(54) **ELECTRODE FOR SECONDARY BATTERY, MANUFACTURING METHOD THEREOF, AND SECONDARY BATTERY INCLUDING THE SAME**

ELEKTRODE FÜR SEKUNDÄRBATTERIE, HERSTELLUNGSVERFAHREN DAFÜR UND SEKUNDÄRBATTERIE DAMIT

ÉLECTRODE POUR BATTERIE SECONDAIRE, SON PROCÉDÉ DE FABRICATION ET BATTERIE SECONDAIRE LA CONTENANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.01.2019   KR 20190006227
15.01.2020   KR 20200005491**

(43) Date of publication of application:
**17.02.2021   Bulletin 2021/07**

(73) Proprietor: **LG CHEM, LTD.
Yeongdeungpo-gu,
Seoul 07336 (KR)**

(72) Inventors:
• **SON, Jeong Man
Daejeon 34122 (KR)**
• **RYU, Dong Jo
Daejeon 34122 (KR)**

• **HAN, Seon Hee
Daejeon 34122 (KR)**
• **HAN, Jung Sup
Daejeon 34122 (KR)**
• **KANG, Min Ah
Daejeon 34122 (KR)**
• **CHOI, Cheolhoon
Daejeon 34122 (KR)**

(74) Representative: **Goddar, Heinz J.
Boehmert & Boehmert
Anwaltspartnerschaft mbB
Pettenkoferstrasse 22
80336 München (DE)**

(56) References cited:
JP-A- 2012 156 061   JP-A- 2012 156 061
JP-B2- S 585 122   KR-A- 20060 057 621
KR-A- 20160 083 718   KR-A- 20190 004 158
KR-B1- 101 774 683   US-A1- 2005 198 815
US-A1- 2016 233 512

# EP 3 780 190 B1

## Description

[Technical Field]

The present invention relates to an electrode for a secondary battery, a manufacturing method thereof, and a secondary battery including the same.

[Background Art]

A rapid increase in the use of fossil fuels has led to an increase in the demand for the use of alternative energy or clean energy. As a part of such demand, most actively investigated fields are power generation/storage applications based on electrochemistry.

At present, a representative example of electrochemical devices using such an electrochemical energy may be a secondary battery, and the application range thereof continues to expand.

In addition, recent increasing concern over environmental issues has brought about a great deal of research associated with electric vehicles and hybrid electric vehicles as substitutes for fossil fuel vehicles such as gasoline vehicles, diesel vehicles, etc., which are a major cause of air pollution, and lithium secondary batteries are being used as a power source of the electric vehicles, hybrid electric vehicles, etc.

As the application field of lithium secondary batteries expands, efforts are being made to solve the insufficient supply by increasing a manufacturing speed.

Efforts are also being made to increase capacity of the secondary battery in order to increase the travel distance of such electric vehicles with a single charge. However, a space in the vehicle is limited, where the secondary battery is mounted, and thus it has been also tried to maximize the energy density of the secondary battery.

In this regard, to increase the energy density, a ratio of an active material in an electrode needed to be increased. However, when the ratio of the active material is increased, a problem of the electrode detachment is further accelerated due to low adhesion to an electrode current collector. At the same time, during a process of manufacturing an electrode using an active material slurry, an excessive amount of the active material is used, while the low adhesion causes a process problem such as contamination of a rolling roll, and thus there is a problem in that production is delayed due to lowered process efficiency such as more frequent cleaning, etc.

Accordingly, there is an urgent demand for technology capable of securing a high level of adhesion while reducing contamination on rolling rolls, even though the ratio of the active material is increased in order to increase the energy density.

US 2016/233512 A1 discloses a binder composition for secondary batteries, wherein conjugated diene latex particles (A) having an average particle diameter of 50 nm or more and 200 nm or less and acrylic copolymer latex particles (B) having an average particle diameter of 300 nm or more and 700 nm or less are present as an independent phase, and the acrylic copolymer latex particles (B) are comprised in an amount of 1% to 30% by weight based on a mass of a solid of the composition. The latex particles (A) and (B) are mixed in a ratio of 90: 10 by a mass ratio of a solid.

KR 20160083718 A discloses an active material preparation method, wherein flake-type artificial graphite as a negative electrode active material, styrene-butadiene rubber having a D50 particle diameter of 120 nm as a second binder, carboxymethylcellulose having an average particle diameter D50 of 100 nm as a first binder and carbon black as a conductive material are mixed. Then, aqueous sodium hydroxide solution is added to the mixture to adjust the pH in the mixture to 7, followed by dispersion treatment.

US 2005/198815 A1 discloses a method for producing a non-aqueous electrolyte secondary battery comprising the steps of (i) mixing a positive electrode active material, a first binder A and a dispersion medium to prepare a paste A, (ii) mixing a conductive agent, a second binder B and a dispersion medium to prepare a paste B, (iii) mixing said paste A and said paste B to prepare a positive electrode material paste C, (iv) applying said positive electrode material paste C onto a positive electrode core member and rolling and drying the resultant member to prepare a positive electrode, and (v) fabricating a battery using said positive electrode, a negative electrode and a non-aqueous electrolyte.

JP 2012156061 A discloses the use of two different diameter styrene-butadiene-acrylic polymer binder particles for preparing an electrode.

[Disclosure]

[Technical Problem]

There is provided an electrode for a secondary battery that secures binding properties with respect to a conductive material and an active material at the same time and has improved mechanical properties, and a secondary battery that includes the electrode for a secondary battery to have an improved discharge capacity and a reduced electrode expansion rate.

Further, there is provided a method of reducing process time and cost in manufacturing the electrode for a secondary battery.

[Technical Solution]

Specifically, in one embodiment of the present invention, there is provided an electrode for a secondary battery according to claim 1, the electrode including two kinds of binders of which particle diameters are different from each other and distributions in an electrode mixture layer are different from each other.

In another embodiment of the present invention, there is provided a method of manufacturing the electrode for a secondary battery according to claim 3 by using an active material slurry composition, wherein the active material slurry composition is prepared by preparing a conductive material dispersion by mixing a binder having a relatively small particle diameter with a conductive material and then mixing the conductive material dispersion with a binder having a relatively large particle diameter and an electrode active material.

In still another embodiment of the present invention, there is provided a secondary battery according to claim 7 including the electrode for a secondary battery of one embodiment.

Further embodiments are disclosed in the dependent claims.

[Effect of the Invention]

In an electrode for a secondary battery of one embodiment, a binder having a relatively small particle diameter is present on the surface part of a conductive material and a binder having a relatively large particle diameter is present on the surface part of an active material, thereby securing binding properties with respect to the conductive material and the active material at the same time.

As described, when the adhesion is increased, there are effects of improving mechanical properties of the electrode itself, increasing a discharge capacity of a battery including the electrode, and lowering an expansion rate of the electrode during operation of the battery.

In terms of a process, there are effects of preventing electrode contamination and defects, and at the same time, shortening a process time or simplifying the process such as reducing the frequency of roll cleaning by reducing contamination of a rolling roll during the manufacturing process.

[Brief Description of Drawings]

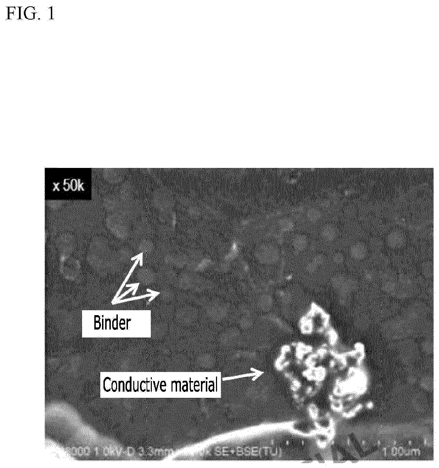

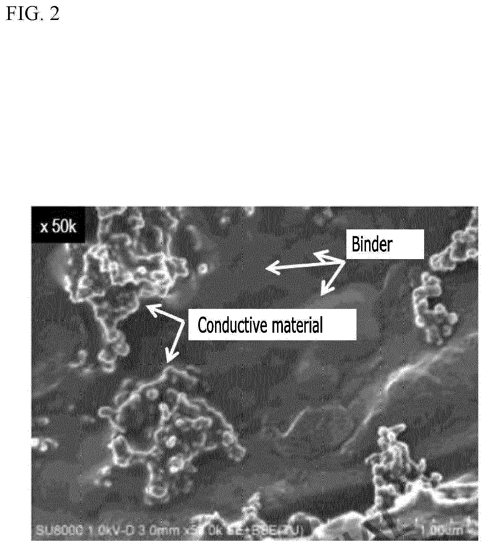

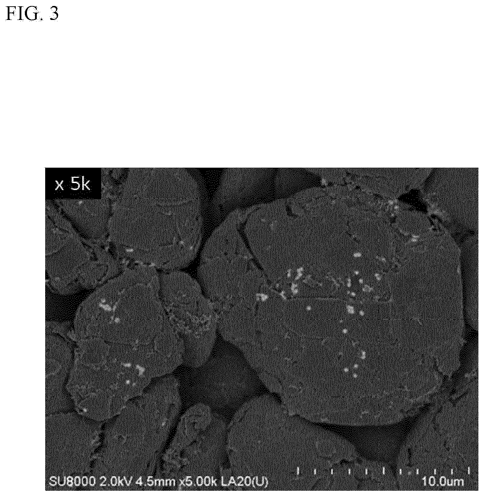

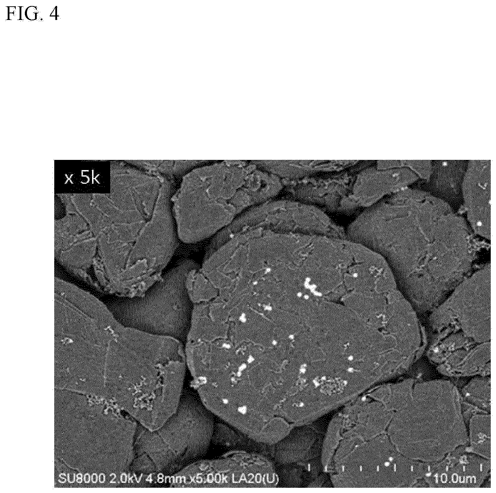

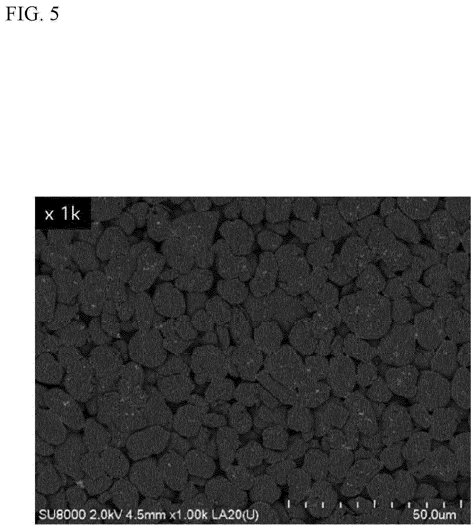

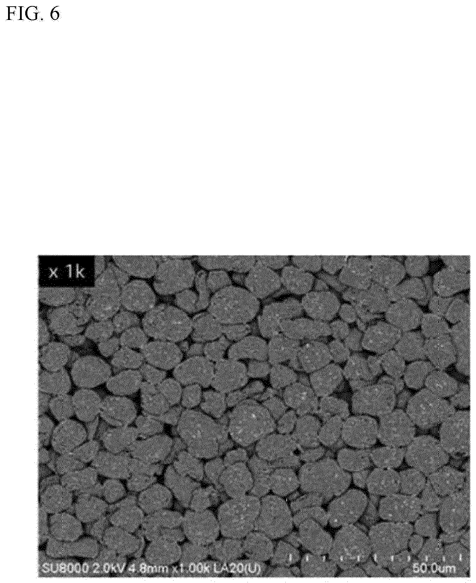

FIGS. 1, 3, and 5 show SEM images of the surface of a negative electrode of Example 1 at different magnifications; and FIGS. 2, 4, and 6 show SEM images of the surface of a negative electrode of Comparative Example 2 at different magnifications.

[Detailed Description of the Embodiments]

The terms used in this description are just for explaining exemplary embodiments and it is not intended to restrict the present invention. The singular expression may include the plural expression unless it is differently expressed contextually. It must be understood that the term "include", "equip", or "have" in the present description is only used for designating the existence of characteristics taken effect, steps, components, or combinations thereof, and do not exclude the existence or the possibility of addition of one or more different characteristics, steps, components or combinations thereof beforehand.

Hereinafter, an electrode for a secondary battery according to a specific embodiment of the present invention and a manufacturing method thereof will be described in more detail.

**Electrode for secondary battery**

In the present invention, provided is an electrode for a secondary battery, wherein an electrode mixture layer is formed on at least one side of a current collector, the electrode mixture layer comprising:

a plurality of electrode active material particles, wherein the electrode active material particle has a D50 particle diameter of 500 nm to 50 $\mu$m;
a plurality of conductive material particles, which are distributed between the electrode active material particles , wherein the conductive material particle has a D50 particle diameter of 10 nm to 2 $\mu$m;
a first binder having an average particle diameter of 40 nm to 100 nm, which is distributed between the conductive material particles and between the conductive material particles and the current collector, wherein 60% by weight or more of the first binder, based on a total weight of the first binder, is distributed on the surface part of the conductive material particles, wherein the surface part is a part from the conductive material particle surface to 1 $\mu$m in the vertical direction, wherein the surface part is_measured as disclosed in the specification; and
a second binder having an average particle diameter of 150 nm to 600 nm, which is distributed between the electrode active material particles different from each other, between the electrode active material particles and the conductive material particles, and between the electrode active material particles and the current collector, wherein 60% by weight or more of the second binder, based on a total weight of the second binder, is distributed on the surface part of the electrode active material particles, wherein the surface part is a part from the electrode active material particle surface to 1 $\mu$m in the vertical direction, wherein the surface part is measured as disclosed in the specification, wherein both the first binder and the second binder are a styrene-butadiene-acrylic polymer, wherein a weight ratio of the first binder and the second binder is 1:2 to 1:20.

Here, the particle diameter of each binder represents the particle diameter of individual particles identified in a cross section of the electrode mixture layer.

Distribution patterns of the electrode active material and the conductive material in the electrode mixture layer may vary depending on the particle diameters thereof. In addition, the binding properties with respect to the electrode active material and the conductive material may vary depending on the particle diameters of the binders.

Specifically, it is common that the particle diameter of the electrode active material is larger than that of the conductive material, and the electrode active material particles are uniformly distributed in the electrode mixture layer, and the conductive material may be distributed between different electrode active material particles.

If only a binder, of which particle diameter is similar to the size of the conductive material, is used, a relatively large amount of the binder is distributed in the electrode of the same volume, which may help to bind the conductive material. However, for the binder of which particle diameter is similar to the size of the conductive material, it may be difficult to bind an active material having a larger particle diameter.

In other words, when only a binder, of which particle diameter is similar to the size of the conductive material, is used, even though the binding of the binder to the conductive material is higher than the binding of the binder to the electrode active material, and the conductive material is stably bound during battery operation, the electrode active material is highly likely to be removed.

In contrast, when a binder, of which particle diameter is similar to the size of the electrode active material, is used, it may be helpful in binding the active material. However, a relatively small amount of the binder is distributed in the electrode of the same volume, and it may be difficult to bind an active material having a larger particle diameter than the binder.

In other words, even though the binding of the binder to the electrode active material is higher than the binding of the binder to the conductive material, and the electrode active material is stably bound during manufacturing of the electrode or battery operation, the conductive material is highly likely to be removed.

In consideration of the above problems, one embodiment of the present invention provides an electrode for a secondary battery, the electrode including two kinds of binders of which particle diameters are different from each other and distributions in an electrode mixture layer are different from each other.

A binder having a relatively small particle diameter is present on the surface part of a conductive material and a binder having a relatively large particle diameter is present on the surface part of active materials, thereby securing binding properties with respect to the conductive material and the active material at the same time.

Specifically, the first binder having a relatively small particle diameter may be distributed between the conductive material particles different from each other, and between the conductive material particles and the current collector, and as a result, the first binder enables them to bind with each other.

Further, the second binder having a relatively large particle diameter may be distributed between the electrode active material particles different from each other, and between the electrode active material particles and the current collector, and as a result, the second binder enables them to bind with each other.

Therefore, the binder having a relatively small particle diameter is present on the surface part of the conductive material and the binder having a relatively large particle diameter is present on the surface part of the active material, thereby securing binding properties with respect to the conductive material and the active material at the same time.

Furthermore, when the adhesion of the electrode is increased, there are effects of improving mechanical properties of the electrode itself, increasing a discharge capacity of a battery including the electrode, and lowering an expansion rate of the electrode during operation of the battery.

In terms of a process, there are effects of preventing electrode contamination and defects, and at the same time, shortening a process time or simplifying the process such as reducing the frequency of roll cleaning by reducing contamination of a rolling roll during the manufacturing process.

Hereinafter, the electrode for a secondary battery of one embodiment will be described in detail.

Distribution patterns of components of electrode mixture layer

60% by weight or more of the first binder, based on the total weight of the first binder, is present on the surface part of the conductive material particles, thereby binding the conductive material particles, and 60% by weight or more of the second binder, based on the total weight of the second binder, is present on the surface part of the electrode active material particles, thereby binding the active material particles.

Here, the surface part may refer to a part from the particle surface to 1 $\mu$m depth in the vertical direction, and may be identified from the surface and the cross section of the electrode mixture layer.

Particle diameters of components of electrode mixture layer

With regard to the electrode active material and the conductive material, their particle diameter may be represented by D50. The D50 is a particle diameter at 50% in the cumulative distribution of the number of particles according to the particle diameter, and may be measured using a laser diffraction method. Specifically, powder to be measured is dispersed in a dispersion medium, and then introduced into a commercially available laser diffraction particle size analyzer (e.g., Microtrac S3500) to measure a difference in diffraction patterns according to the particle diameter when the particles pass through a laser beam, thereby calculating particle size distributions. D50 may be measured by calculating the particle diameter at 50% in the cumulative distribution of the number of particles according to the particle diameter in the analyzer.

Meanwhile, the first binder and the second binder are polymer particles and it is difficult to obtain D50 thereof, and thus an average is obtained from the particle diameters of individual particles identified in the cross section of the electrode mixture layer, and the particle diameter may be expressed, based on the average particle diameter.

Based on this definition, the particle diameters of the components of the electrode mixture layer will be explained as follows.

As the conductive material, a conductive material having a particle diameter (D50) within the range of 10 nm to 2 $\mu$m is used. Specifically, a conductive material having a particle diameter (D50) within the range of 20 nm to 1 $\mu$m, for example, 30 nm to 100 nm may be used as the conductive material.

As the first binder distributed between the conductive material particles and the current collector, a binder having a particle diameter within the range of 40 nm to 100 nm, for example, 50 nm to 80 nm is used.

When the first binder is excessively small outside the above range, there is a problem in that handling is difficult in terms of the process and it is difficult to achieve a stable binder. When the first binder is excessively large outside the above range, the first binder may not be distinguished from the second binder, and it may be difficult to improve the binding properties with respect to the conductive material at a desired level.

Meanwhile, as the electrode active material, an electrode active material having a particle diameter (D50) within the range of 500 nm to 50 $\mu$m is used. Specifically, in consideration of capacity, processing, etc., an electrode active material having a particle diameter (D50) within the range of 1 $\mu$m to 40 $\mu$m, for example, 5 $\mu$m to 30 $\mu$m may be used as the electrode active material.

As the second binder distributed between the electrode active material particles different from each other, between the electrode active material particles and the conductive material particles, and between the electrode active material particles and the current collector, a binder having a particle diameter of 150 nm to 600 nm, for example, 160 nm to 300 nm is used.

When the second binder is excessively small outside the above range, the second binder may not be distinguished from the first binder, and it may be difficult to improve the binding properties with respect to the electrode active material having a larger particle diameter. When the second binder is excessively large outside the above range, it may be difficult to realize excellent binding strength because the absolute number of particles required for binding of the active material is small.

Kind and content of binder

The first binder and the second binder may be of the same type, but may be different from each other only in terms of particle diameter.

For example, the first binder and the second binder may be, in common, one or more polymers of polyvinylidene fluoride, polyvinyl alcohols, carboxymethyl cellulose (CMC), starch, hydroxypropyl cellulose, regenerated cellulose, polyvinyl pyrollidone, tetrafluoroethylene, polyethylene, polypropylene, an ethylene-propylene-diene terpolymer (EPDM), sulfonated EPDM, styrene butadiene latex, fluoro latex, etc., and may be, specifically, as a water-based binder, a styrene-butadiene-based latex having excellent binding strength, e.g., a styrene-butadiene-acrylic polymer.

Such binders may be generally included in an amount of 0.1% by weight to 30% by weight, specifically, 1% by weight to 10% by weight, based on the total weight of the electrode mixture layer.

A weight ratio of the first binder and the second binder is 1:2 to 1:20, specifically, 1:5 to 1:15.

The above range may be appropriately determined by the contents of the conductive material and the active material, and in general, the content of the second binder is high because the content of the active material is higher than the content of the conductive material.

Kind and content of electrode active material

The electrode of one embodiment may be any one of a positive electrode and a negative electrode, and therefore, the kind of the electrode active material may be determined as any one of a positive electrode active material and a negative electrode active material.

The positive electrode active material may include, for example, a layered compound such as a lithium cobalt oxide ($LiCoO_2$), lithium nickel oxide ($LiNiO_2$) etc., or a compound substituted with one or more transition metals; lithium manganese oxide such as Chemical formula of $Li_{1+x}Mn_{2-x}O_4$ (wherein x is 0 to 0.33), $LiMnO_3$, $LiMn_2O_3$, $LiMnO_2$, etc.; lithium copper oxide ($Li_2CuO_2$); vanadium oxides such as $LiV_3O_8$, $LiV_3O_4$, $V_2O_5$, $Cu_2V_2O_7$, etc.; a Ni site type lithium nickel oxide represented by Chemical formula of $LiNi_{1-x}M_xO_2$ (wherein M = Co, Mn, Al, Cu, Fe, Mg, B, or Ga, and x = 0.01 to 0.3); a lithium manganese complex oxide represented by Chemical formula of $LiMn_{2-x}M_xO_2$ (wherein M = Co, Ni, Fe, Cr, Zn, or Ta, and x = 0.01 to 0.1) or $Li_2Mn_3MO_8$ (wherein M = Fe, Co, Ni, Cu, or Zn); $LiMn_2O_4$ wherein Li is partially substituted by alkaline earth metal ions; disulfide compounds; $Fe_2(MoO_4)_3$, etc., but is not limited thereto.

The negative electrode active material may include, for example, may be made of carbon such as non-graphitizing carbon and graphite-based carbon; metal composite oxides such as $Li_xFe_2O_3$ ($0 \leq x \leq 1$), $Li_xWO_2$ ($0 \leq x \leq 1$), $Sn_xMe_{1-x}Me'_yO_z$ (Me: Mn, Fe, Pb, Ge; Me': Al, B, P, Si, Group I, Group II and Group III elements of the Periodic Table of the Elements, or halogens; $0 < x \leq 1$; $1 \leq y \leq 3$; $1 \leq z \leq 8$), etc.; lithium metals; lithium alloys; silicon-based alloys; tin-based alloys; metal oxides such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, $Bi_2O_5$, etc.; conductive polymers such as polyacetylene, etc.; Li-Co-Ni based materials, etc.

Generally, the electrode active material may be included in an amount of 60% by weight to 99% by weight, specifically, 80% by weight to 98% by weight, based on the total weight of the electrode mixture layer.

The electrode of one embodiment may be a negative electrode, and therefore, a negative electrode active material may be applied as the electrode active material. In a secondary battery including the negative electrode of one embodiment, a discharge capacity may be improved, and expansion of the negative electrode may be suppressed.

Kind and content of conductive material

Meanwhile, the conductive material improving conductivity between the electrode active material particles is not particularly limited, as long as it is a known conductive material having conductivity without causing chemical changes in a battery, and for example, carbon black such as carbon black, acetylene black, Ketjen black, channel black, furnace black, lamp black, thermal black, etc.; conductive fibers such as carbon fibers, metallic fibers, etc.; metallic powders such as carbon fluoride powder, aluminum powder, nickel powder, etc.; conductive whiskers such as zinc oxide, potassium titanate, etc.; conductive metal oxides such as titanium oxide, etc.; conductive materials such as polyphenylene derivatives, etc. may be used.

Commonly, the conductive material may be included in an amount of 0.1% by weight to 30% by weight, specifically, 1% by weight to 10% by weight, based on the total weight of the electrode mixture layer.

Other components of electrode mixture layer

Meanwhile, the electrode mixture layer may further include a filler.

The filler is a component optionally used to inhibit expansion of the positive electrode. The filler is not particularly limited, as long as it is a fibrous material without causing chemical changes in a battery. For example, olefinic polymers such as polyethylene, polypropylene, etc.; and fibrous materials such as glass fibers, carbon fibers, etc. may be used. The filler may be included in an amount of 0% by weight to 10% by weight, based on the total weight of the electrode mixture layer.

Current collector

As mentioned above, the electrode of one embodiment may be any one of a positive electrode and a negative electrode, and therefore, the current collector formed on the electrode mixture layer may be determined as any one of a positive electrode current collector and a negative positive electrode current collector.

The positive electrode current collector is generally fabricated in a thickness of 3 μm to 200 μm. The positive electrode current collector is not particularly limited, as long as it has high conductivity without causing chemical changes in a battery. For example, any one selected from stainless steel, aluminum, nickel, titanium, and aluminum or stainless steel having a surface treated with carbon, nickel, titanium, or silver may be used, and specifically, aluminum may be used. The current collector may also be processed to form fine irregularities on the surface thereof so as to enhance adhesive strength to the positive electrode active material. The current collector may be used in various forms including films, sheets, foils, nets, porous structures, foams, non-woven fabrics, etc.

The negative electrode current collector is generally fabricated in a thickness of 3 μm to 200 μm, and it is not particularly limited, as long as it has conductivity without causing chemical changes in a battery. For example, any one selected from copper, stainless steel, aluminum, nickel, titanium, sintered carbon, and copper or stainless steel having a surface treated with carbon, nickel, titanium, or silver, aluminum-cadmium alloys, etc. may be used. Further, like the positive electrode current collector, the negative electrode current collector may also be processed to form fine irregularities on the surface thereof so as to enhance adhesive strength to the negative electrode active material. The negative electrode current collector may be used in various forms including films, sheets, foils, nets, porous structures, foams, non-woven fabrics, etc.

## Method of manufacturing electrode for secondary battery

Another embodiment of the present invention provides a method of manufacturing an electrode for a secondary battery, the method including the steps of preparing a conductive material dispersion by mixing a first binder with a conductive material; preparing an active material slurry composition by mixing the conductive material dispersion with a second binder and an electrode active material; and obtaining the electrode by applying the active material slurry composition onto at least one side of the current collector, followed by drying and rolling.

This method corresponds to a method of controlling distribution patterns of the first binder and the second binder in the finally obtained electrode by controlling the supply timing of the first binder and the second binder during the process of preparing the active material slurry composition.

Specifically, in the manufacturing method of one embodiment, the binder having a relatively small particle diameter is first mixed with the conductive material to prepare the conductive material dispersion, and the binder having a relatively large particle diameter and the electrode active material are mixed with the conductive material dispersion to prepare the active material slurry composition, which may be used to manufacture the above-described electrode of one embodiment.

According to the manufacturing method of one embodiment, it is possible to obtain an electrode having excellent mechanical properties, electrochemical properties, etc., and in terms of the process, there are effects of preventing electrode contamination and defects, and at the same time, shortening a process time or simplifying the process such as reducing the frequency of roll cleaning by reducing contamination of a rolling roll during the manufacturing process.

Hereinafter, the method of manufacturing the electrode for a secondary battery of one embodiment will be described in detail.

### Process of preparing binders

The first binder and the second binder may be generally prepared by a known emulsion polymerization method. Specifically, the first binder and the second binder may be each independently prepared by a method including the step of polymerizing monomers in the presence of an emulsifier, a polymerization initiator, and a solvent.

However, in order to allow the first binder and the second binder to have different particle diameters, the content of the emulsifier in the total amount of the monomer, the emulsifier, the polymerization initiator, and the solvent may be adjusted.

More specifically, as the content of the emulsifier is higher, a binder having a relatively small particle diameter may be prepared. In this regard, when the first binder is prepared, the content of the emulsifier in the total amount of the monomer, the emulsifier, the polymerization initiator, and the solvent may be further increased, as compared with the second binder.

Specifically, the content of the emulsifier to prepare the first binder may be more than 0.9 parts by weight, specifically, 1 part by weight to 5 parts by weight, and the content of the emulsifier to prepare the second binder may be 0.9 parts by weight or less, specifically, 0.3 parts by weight to 0.8 parts by weight, based on 100 parts by weight of monomers.

The emulsifier is used for emulsion polymerization, and for example, oleic acid, stearic acid, lauric acid, fatty acid salts such as sodium or potassium salts of mixed fatty acids, general anionic emulsifiers such as rosin acid, etc. may be used, and specifically, a reactive emulsifier to improve stability of polymers may be added. The emulsifier may be used alone or in combination of two or more thereof.

The monomers may be basic monomers that constitute the binder to be prepared. For example, in order to prepare a styrene butadiene latex, which is an example of the first binder and the second binder, a monomer of acrylic acid that imparts hydrophilicity may be used, together with styrene and butadiene.

Further, the polymerization initiator may be an inorganic or organic peroxide. For example, a water-soluble initiator including potassium persulfate, sodium persulfate, ammonium persulfate, etc., or an oil-soluble initiator including cumene hydroperoxide, benzoyl peroxide, etc. may be used.

The polymerization initiator may be included in an amount of 0.01 part by weight to 2 parts by weight, based on 100 parts by weight of the monomers.

Furthermore, an activator to promote the reaction initiation of peroxide may be further included, together with the polymerization initiator, and the activator may include one or more selected from the group consisting of sodium formaldehyde sulfoxylate, sodium ethylenediaminetetraacetate, ferrous sulfate, and dextrose.

The solvent may be an organic solvent or water, specifically, water.

The polymerization temperature and polymerization time for the emulsion polymerization of each binder may be appropriately determined according to the polymerization method or the type of polymerization initiator to be used. For example, the polymerization temperature may be about 50°C to about 200°C, and the polymerization time may be about 1 hr to about 20 hr.

Process of preparing conductive material dispersion

When the conductive material dispersion is prepared, it is mixed with the first binder which is a binder improving the binding properties of the conductive material. Optionally, a thickener may be added.

The thickener is to control viscosity, and may be, for example, one or more selected from the group consisting of cellulose polymers, polyethylene glycol, polyacrylamide, poly(N-vinylamide), and poly(N-vinylpyrrolidone), and the cellulose polymers may be one or more selected from the group consisting of carboxymethyl cellulose (CMC), methyl cellulose (MC), hydroxypropyl cellulose (HPC), methyl hydroxypropyl cellulose (MHPC), ethyl hydroxyethyl cellulose (EHEC), methyl ethylhydroxyethyl cellulose (MEHEC), and cellulose gum, and more specifically, carboxymethyl cellulose (CMC).

The thickener solution may be a solution containing the above materials at a concentration of 0.5% to 20%.

The actual content of the thickener may be 50 parts by weight to 100 parts by weight, based on 100 parts by weight of the conductive material and the first binder.

In this regard, a content ratio of the conductive material and the first binder may be 10:1 to 1:1. When the content of conductive material is excessively high outside the above range, it is not preferable because the binder is not sufficient to secure the binding properties of the conductive material. When the content of conductive material is excessively low, it is not preferable because the content of the conductive material itself decreases, resulting in performance degradation of a secondary battery.

Process of preparing active material slurry composition

Thereafter, the electrode active material, the solvent, and the second binder may be added to the conductive material dispersion, and this mixture is stirred to complete the active material slurry composition.

In this regard, the electrode active material may be added such that its content in the electrode mixture layer is as described above, and the second binder may also be added at the above-described content ratio with respect to the first binder.

The solvent added in the process may be the same as the solvent used in preparing the conductive material dispersion, for example, an organic solvent or water. Specifically, when the first binder and the second binder are water-based binders, for example, styrene-butadiene-acrylic polymers, the solvent may be water.

As in the present invention, the first binder and the second binder are added at different time points, and the conductive material dispersion is first prepared, and then the slurry is prepared. As a result, the binder having a relatively small particle size may be present on the surface part of the conductive material, and the binder having a relatively large particle size may be present on the surface part of the active material, as described above.

Process of applying, drying, and rolling active material slurry composition

The electrode, in which the electrode mixture layer is formed on at least one side of the current collector, may be obtained by applying the electrode slurry composition onto at least one side of the current collector, followed by drying and rolling.

The applying, drying, and rolling processes may be performed according to generally known methods, and thus detailed descriptions thereof will be omitted.

The thickness of the electrode mixture layer is not limited, but may be 20 $\mu$m to 200 $\mu$m on one side.

The manufacturing method of one embodiment may be a method of manufacturing the positive electrode or the negative electrode. Specifically, when it is intended to improve discharge capacity of the secondary battery and to suppress expansion of the negative electrode, the negative electrode may be manufactured by using the negative electrode active material as the electrode active material.

## Secondary battery

Still another embodiment of the present invention provides a secondary battery including the above-described electrode for a secondary battery.

More specifically, the secondary battery may have a structure in which an electrode assembly including the electrode (positive electrode or negative electrode), a counter electrode of the electrode (negative electrode or positive electrode), and a separator interposed between the electrodes is mounted in a battery case, together with an electrolyte liquid.

Hereinafter, other components of the secondary battery will be explained.

As the separator, an insulating thin film having high ion permeability and mechanical strength is used. The separator generally has a pore diameter of 0.01 $\mu$m to 10 $\mu$m and a thickness of 5 $\mu$m to 300 $\mu$m. As the separator, for example, sheets or non-woven fabrics, made of a chemical resistant and hydrophobic olefin-based polymer such as polypropylene, etc.; or glass fibers or polyethylene, are used. When a solid electrolyte such as a polymer, etc. is used as an electrolyte, the solid electrolyte may also serve as a separator.

Alternatively, an SRS separator (Safety Reinforced Separator), in which a mixture of inorganic particles and a binder is coated on at least one side of an olefin-based polymer, may be used. A specific description of the SRS separator can be found in the Korean Patent Application No. 10-2008-0005527.

The electrolyte liquid may be a lithium salt-containing non-aqueous electrolyte, and the lithium salt-containing non-aqueous electrolyte consists of a non-aqueous electrolyte liquid and a lithium salt. The non-aqueous electrolyte may be a non-aqueous organic solvent, an organic solid electrolyte, an inorganic solid electrolyte, etc., but is not limited thereto.

As the non-aqueous organic solvent, for example, an aprotic organic solvent such as N-methyl-2-pyrrolidone, propylene carbonate, ethylene carbonate, butylene carbonate, dimethyl carbonate, diethyl carbonate, gamma-butyrolactone, 1,2-dimethoxyethane, tetrahydroxy furan, 2-methyl tetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivatives, sulfolane, methyl sulfolane, 1,3-dimethyl-2-imidazolidinone, propylene carbonate derivatives, tetrahydrofuran derivatives, ether, methyl propinate, ethyl propionate, etc. may be used.

As the organic solid electrolyte, for example, polyethylene derivatives, polyethylene oxide derivatives, polypropylene oxide derivatives, phosphoric acid ester polymers, polyagitation lysine, polyester sulfide, polyvinyl alcohols, polyvinylidene fluoride, polymers containing ionic dissociation groups, etc. may be used.

As inorganic solid electrolyte, for example, nitrides, halides, and sulfates of Li, such as $Li_3N$, $LiI$, $Li_5NI_2$, $Li_3N$-$LiI$-$LiOH$, $LiSiO_4$, $LiSiO_4$-$LiI$-$LiOH$, $Li_2SiS_3$, $Li_4SiO_4$, $Li_4SiO_4$-$LiI$-$LiOH$, $Li_3PO_4$-$Li_2S$-$SiS_2$, etc., may be used.

The lithium salt is a material that is readily soluble in the non-aqueous electrolyte, and for example, $LiCl$, $LiBr$, $LiI$, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $(CF_3SO_2)_2NLi$, chloroborane lithium, lower aliphatic carboxylic acid lithium, lithium tetraphenyl borate, imide, etc. may be used.

In addition, in order to improve charge/discharge characteristics and flame retardancy, for example, pyridine, triethylphosphite, triethanolamine, cyclic ether, ethylenediamine, n-glyme, hexaphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol, aluminum trichloride, etc. may be added to the non-aqueous electrolyte. If necessary, in order to impart incombustibility, halogen-containing solvents such as carbon tetrachloride, ethylene trifluoride, etc. may be further included. In order to improve high-temperature storage characteristics, carbon dioxide gas may be further included. FEC (FluoroEthylene Carbonate), PRS (Propene sultone), etc. may be further included.

In one specific embodiment, the lithium salt-containing non-aqueous electrolyte may be prepared by adding a lithium salt, such as $LiPF_6$, $LiClO_4$, $LiBF_4$, $LiN(SO_2CF_3)_2$, etc., to a mixed solvent of a cyclic carbonate of EC or PC, which is a high dielectric solvent, and a linear carbonate of DEC, DMC, or EMC, which is a low viscosity solvent.

Also provided is a battery pack including the secondary battery as a unit battery, and a device including the battery pack as a power source.

The device may include, for example, laptop computers, netbooks, tablet PCs, mobile phones, MP3s, wearable electronic devices, power tools, electric vehicles (EVs), hybrid electric vehicles (HEVs), plug-in hybrid electric vehicles (PHEVs), electric bicycles (E-bikes), electric scooters (E-scooters), electric golf carts, or power storage systems, but is not limited thereto.

Since the structure and manufacturing method of such a device are well known in the art, detailed descriptions thereof will be omitted herein.

Hereinafter, the present invention will be described with reference to exemplary embodiments. However, these exemplary embodiments will be provided for better understanding of the present invention, and the scope of the present invention is not limited thereto.

### Preparation Example 1

Butadiene (52 g), styrene (46 g), and acrylic acid (2 g) as monomers were added to water containing sodium lauryl sulfate (1 g) as an emulsifier and potassium persulfate (0.2 g) as a polymerization initiator, and they were mixed with each other and allowed to polymerize at 70°C for about 5 hours to prepare a binder A having a solid content of 40%, in which a particle diameter of the polymerized binder was 80 nm (as measured by a dynamic light scattering (DLS) instrument).

### Preparation Example 2

A binder B having a solid content of 40%, in which a particle diameter of the polymerized binder was 200 nm (as measured by a dynamic light scattering (DLS) instrument), was prepared under the same reaction conditions as in Preparation Example 1, except that 0.5 g of the emulsifier was used.

### Preparation Example 3

A binder C having a solid content of 40%, in which a particle diameter of the polymerized binder was 160 nm (as measured by a dynamic light scattering (DLS) instrument), was prepared under the same reaction conditions as in Preparation Example 1, except that 0.7 g of the emulsifier was used.

### Preparation Example 4

A binder D having a solid content of 40%, in which a particle diameter of the polymerized binder was 50 nm (as measured by a dynamic light scattering (DLS) instrument), was prepared under the same reaction conditions as in Preparation Example 1, except that 2.5 g of the emulsifier was used.

### Example 1

Preparation of conductive material dispersion

1% carboxymethyl cellulose (CMC) solution (100 g), a conductive material (D50: 30 nm, Super-P) (1.5 g), and the binder A (0.5 g) of Preparation Example 1 were stirred at room temperature for 1 hr to prepare a conductive material dispersion.

Preparation of active material slurry composition

To the prepared conductive material dispersion, artificial graphite (D50: 18 $\mu$m, 95 g), distilled water (20 g), and the binder B (5.75 g) of Preparation Example 2 were added and stirred at room temperature for 1 hr to prepare a slurry composition.

Manufacture of negative electrode

A copper foil having a thickness of 20 $\mu$m was coated with the slurry composition at a loading amount of 8.2 mg/cm$^2$, and dried and rolled to a thickness of 80 $\mu$m to manufacture a negative electrode.

### Example 2

Preparation of conductive material dispersion

1% carboxymethyl cellulose (CMC) solution (100 g), a conductive material (Super-P) (D50: 30 nm, 1.5 g), and the binder A (1.0 g) of Preparation Example 1 were stirred at room temperature for 1 hr to prepare a conductive material dispersion.

Preparation of active material slurry composition

To the prepared conductive material dispersion, artificial graphite (D50: 18 μm, 95 g), distilled water (20 g), and the binder B (5.25 g) of Preparation Example 2 were added and stirred at room temperature for 1 hr to prepare a slurry composition.

Manufacture of negative electrode

A copper foil having a thickness of 20 μm was coated with the slurry composition at a loading amount of 8.2 mg/cm$^2$, and dried and rolled to a thickness of 80 μm to manufacture a negative electrode.

**Example 3**

Preparation of conductive material dispersion

1% carboxymethyl cellulose (CMC) solution (100 g), a conductive material (Super-P) (D50: 30 nm, 1.5 g), and the binder D (1.0 g) of Preparation Example 4 were stirred at room temperature for 1 hr to prepare a conductive material dispersion.

Preparation of active material slurry composition

To the prepared conductive material dispersion, artificial graphite (D50: 18 μm, 95 g), distilled water (20 g), and the binder B (5.25 g) of Preparation Example 2 were added and stirred at room temperature for 1 hr to prepare a slurry composition.

Manufacture of negative electrode

A copper foil having a thickness of 20 μm was coated with the slurry composition at a loading amount of 8.2 mg/cm$^2$, and dried and rolled to a thickness of 80 μm to manufacture a negative electrode.

**Example 4**

Preparation of conductive material dispersion

1% carboxymethyl cellulose (CMC) solution (100 g), a conductive material (D50: 30 nm, Super-P) (1.5 g), and the binder D (1.0 g) of Preparation Example 4 were stirred at room temperature for 1 hr to prepare a conductive material dispersion.

Preparation of active material slurry composition

To the prepared conductive material dispersion, artificial graphite (D50: 18 μm, 95 g), distilled water (20 g), and the binder C (5.25 g) of Preparation Example 3 were added and stirred at room temperature for 1 hr to prepare a slurry composition.

Manufacture of negative electrode

A copper foil having a thickness of 20 μm was coated with the slurry composition at a loading amount of 8.2 mg/cm$^2$, and dried and rolled to a thickness of 80 μm to manufacture a negative electrode.

**Comparative Example 1**

The process sequence was the same as in Example 1, except that a conductive material dispersion was prepared without using the binder A, and then an active material slurry composition and a negative electrode were prepared.

Preparation of conductive material dispersion

In detail, 1% carboxymethyl cellulose (CMC) solution (100 g) and a conductive material (D50: 30 nm, Super-P) (1.5 g) were stirred at room temperature for 1 hr to prepare a conductive material dispersion.

Preparation of active material slurry composition

To the prepared conductive material dispersion, artificial graphite (D50: 18 $\mu$m, 95 g), distilled water (20 g), and the binder B (6.25 g) of Preparation Example 2 were added and stirred at room temperature for 1 hr to prepare a slurry composition.

Manufacture of negative electrode

A copper foil having a thickness of 20 $\mu$m was coated with the slurry composition at a loading amount of 8.2 mg/cm$^2$, and dried and rolled to a thickness of 80 $\mu$m to manufacture a negative electrode.

**Comparative Example 2**

The process sequence was the same as in Example 1, except that a conductive material dispersion was prepared by replacing the binder A as follows. The conductive material dispersion thus prepared was mixed with binders A and B to prepare an active material slurry composition, and then a negative electrode was manufactured.
The binder A (0.5 g) prepared in Preparation Example 1 was mixed with the binder B (5.75 g) prepared in Preparation Example 2 to prepare a mixed binder.

Preparation of conductive material dispersion

In detail, 1% CMC solution (100 g) and a conductive material (1.5 g) were stirred at room temperature for 1 hr to prepare a conductive material dispersion.

Preparation of active material slurry composition

To the prepared conductive material dispersion, artificial graphite (D50: 18 $\mu$m, 95 g), distilled water (20 g), and the mixed binder A+B (6.25 g) were added and stirred at room temperature for 1 hr to prepare a slurry composition.

Manufacture of negative electrode

A copper foil having a thickness of 20 $\mu$m was coated with the slurry composition at a loading amount of 8.2 mg/cm$^2$, and dried and rolled to a thickness of 80 $\mu$m to manufacture a negative electrode.

**Comparative Example 3**

The process sequence was the same as in Example 1, except that a dispersion was prepared by replacing the binder A as follows. Then, an active material slurry composition was prepared, and a negative electrode was manufactured.
In detail, the binder C (0.5 g) was used instead of the binder A to prepare a conductive material dispersion.
Thereafter, in the same manner as in Example 1, an active material slurry composition was prepared, and a negative electrode were manufactured.

**Comparative Example 4**

Without separately preparing a conductive material dispersion, a conductive material, an active material, and binders A and B were mixed together to prepare an active material slurry composition, and then a negative electrode was manufactured.

Preparation of active material slurry composition

In detail, the binder A (0.5 g) prepared in Preparation Example 1 was mixed with the binder B (5.75 g) prepared in Preparation Example 2 to prepare a mixed binder.
1% CMC solution (100 g), a conductive material (1.5 g), artificial graphite (D50: 18 $\mu$m, 95 g), distilled water (20 g), and the mixed binder A+B (6.25 g) were mixed at once, and stirred at room temperature for 1 hr to prepare a slurry composition.

Manufacture of negative electrode

A copper foil having a thickness of 20 $\mu$m was coated with the slurry composition at a loading amount of 8.2 mg/cm$^2$, and dried and rolled to a thickness of 80 $\mu$m to manufacture a negative electrode.

**Experimental Example 1 (Adhesion of negative electrode)**

**(1) Peeling test**

Each of the negative electrodes manufactured in Examples and Comparative Examples was cut into 60 mm (length) x 25 mm (width) to obtain each test specimen.
A double-sided tape was attached to a slide glass, and the test specimen was placed thereon and adhered by reciprocating movement of a 2-kg roller three times, and then pulled at 5 mm/sec using a UTM (TA Company) device to measure a force which was needed to peel the test specimen from the slide glass. At this time, the measuring angle of the slide glass and the electrode was 180°.
The results are shown in Table 1 below.

**(2) Evaluation of surface contamination of rolling roll before and after rolling**

A rolling roll made of SUS material, which was washed with ethanol, and then dried at room temperature for 10 min or more, was used to roll 4 m of each negative electrode. Then, color changes of the rolling roll were measured using a portable colorimeter (Konica Minolta, Portable Spectrophotometer) to examine the degree of surface contamination.
The results are shown in Table 1 below.

*A clean rolling roll made of SUS material has a chromaticity value of 80, and as it is more contaminated, the chromaticity value decreases.

[Table 1]

|  | Adhesion (gf/cm) | Chromaticity value of rolling roll after 4 m rolling |
|---|---|---|
| Example 1 | 36 | 79 |
| Example 2 | 34 | 79 |
| Example 3 | 33 | 79 |
| Example 4 | 32 | 79 |
| Comparative Example 1 | 32 | 70 |
| Comparative Example 2 | 30 | 74 |
| Comparative Example 3 | 32 | 75 |
| Comparative Example 4 | 27 | 79 |

According to Table 1, when the electrodes were manufactured according to the present invention, high adhesion and low contamination of the rolling roll were observed. Otherwise, lowered adhesion and considerable contamination of the rolling roll were observed.

**Experimental Example 2 (Evaluation of distribution pattern of each binder in negative electrode)**

Each of the negative electrodes of Example 1 and Comparative Example 2 was treated with $OsO_4$ to stain the binder included in each negative electrode with $OsO_4$. Thereafter, the surface of each negative electrode was observed by SEM.
As mentioned above, an average is calculated from the diameters of individual particles identified on the surface of the negative electrode (i.e., the cross section of the negative electrode mixture layer), and based on the average particle diameter, the particle diameter of each binder may be expressed.
FIGS. 1, 3, and 5 show SEM images of the surface of the negative electrode of Example 1 at different magnifications, and FIGS. 2, 4, and 6 show SEM images of the surface of the negative electrode of Comparative Example 2 at different magnifications.

According to FIGS. 1, 3, and 5, it was confirmed that the binder having a small average particle diameter of 100 mn or less was mainly distributed around the conductive material. In contrast, according to FIGS. 2, 4, and 6, it was confirmed that the binder having a large average particle diameter of 200 mn was mainly distributed around the conductive material.

These results indicate that even though two kinds of binders having different particle diameters are blended at the same ratio, the distribution patterns of the binders in the final negative electrode may differ depending on the supply time of each binder during the process of preparing the active material slurry.

Specifically, as in Example 1, when the binder having the relatively small particle diameter was first mixed with the conductive material to prepare the conductive material dispersion, and then the binder having the relatively large particle diameter and the active material were added to the conductive material dispersion and mixed with each other to prepare the active material slurry composition, the negative electrode in which the binder having the relatively small particle diameter was distributed around the conductive material was finally obtained.

Here, when the particle diameters of the components of the electrode mixture layer are considered, it is apparent that a plurality of conductive material particles are distributed between the electrode active material particles different from each other. Therefore, it can be seen that the binder having the relatively small particle diameter is distributed between the conductive material particles different from each other, and between the conductive material particles and the current collector; and the binder having the relatively large particle diameter is distributed between the electrode active material particles different from each other, between the electrode active material particles and the conductive material particles, and between the electrode active material particles and the current collector.

In contrast, as in Comparative Example 2, when the conductive material dispersion was prepared without the binder, and then two kinds of the binders having different particle diameters and the active material were added at once to the conductive material dispersion and mixed with each other to prepare the active material slurry composition, the negative electrode in which the two kinds of the binders were randomly distributed regardless of the particle diameters thereof was finally obtained.

### Experimental Example 3 (Evaluation of discharge characteristics of battery and expansion rate of negative electrode)

Each of the negative electrodes manufactured in Examples and Comparative Examples were used as a working electrode, and a lithium metal sheet having a thickness of 150 $\mu$m was used as a reference electrode, and a polyethylene separator (thickness: 20 $\mu$m, porosity: 40%) was interposed between the working electrode and the reference electrode, and mounted in a battery case, and an electrolyte liquid was injected thereto. Then, a 2032 half-cell type lithium secondary battery was manufactured according to a common manufacturing method.

The electrolyte liquid was prepared by dissolving $LiPF_6$ at a concentration of 1.3 M in a mixed solvent (a weight ratio of EC:PC:DEC=3:2:5) of ethylene carbonate (EC), propylene carbonate (PC), and diethyl carbonate (DEC), and adding 10% by weight of fluoroethylene carbonate (FEC) as an additive thereto, based on the total weight of the electrolyte liquid.

Each lithium secondary battery was evaluated as follows, and the evaluation results are shown in Table 2 below:

Discharge characteristics of battery: In a constant temperature chamber at 25°C, each lithium ion half-cell was discharged three times in CC/CV mode from 1.5 V to 5 mV at 0.1 C, and then charged to 1.5 V in CC mode at 0.1 C. This cycle was repeated three times, and a 20-minute pause was provided between charging and discharging. The resulting charged battery was finally discharged at 1 C in CC/CV mode, and then the discharge capacity of CC relative to the total discharge capacity was converted into a percentage according to the following equation.

$$[\text{Discharge characteristics of battery}] = 100\% * \{(1.0C\ CC)\})/\{(1.0C\ CC/CV)\}$$

Expansion rate of negative electrode: After evaluating the discharge characteristics, each battery was disassembled to recover the negative electrode. Each recovered negative electrode was washed with a DMC (dimethyl carbonate) solvent, and naturally dried at room temperature for 10 minutes, and then thickness thereof was measured. Accordingly, the measured thickness was substituted into the following equation, and the expansion rate of the negative electrode was calculated.

[Expansion rate of negative electrode]= 100% * {(Thickness of negative electrode of discharged battery) - (Thickness of rolled negative electrode)}/{(Thickness of rolled negative electrode) - (Thickness of copper foil)}

Here, definition of each term is as follows:

Thickness of negative electrode of discharged battery = Thickness of negative electrode upon 1st discharging of lithium ion battery Thickness of rolled negative electrode = Thickness of negative electrode before assembly of lithium ion battery Thickness of copper foil = Thickness of negative electrode current collector in rolled electrode

[Table 2]

|  | 100%*{((1.0C CC)})/{(1.0C CC/CV) | Expansion rate of negative electrode |
|---|---|---|
| Example 1 | 40 % | 21 % |
| Example 2 | 42 % | 20 % |
| Example 3 | 43 % | 20 % |
| Example 4 | 44 % | 20 % |
| Comparative Example 1 | 36 % | 23 % |
| Comparative Example 2 | 39 % | 23 % |
| Comparative Example 3 | 38 % | 22 % |
| Comparative Example 4 | 40 % | 22 % |

When the results of Table 1 and the results of Table 2 were taken together, it can be seen that Examples are advantageous in securing excellent performances in terms of adhesion of the negative electrode, degree of contamination during rolling, expansion rate of the negative electrode, and rate characteristics, as compared with Comparative Examples.
While exemplary embodiments of the present invention have been described, it will be understood that the scope of protection is defined in the appended claims.

## Claims

1. An electrode for a secondary battery, wherein an electrode mixture layer is formed on at least one side of a current collector, the electrode mixture layer comprising:

    a plurality of electrode active material particles, wherein the electrode active material particle has a D50 particle diameter of 500 nm to 50 $\mu$m;
    a plurality of conductive material particles, which are distributed between the electrode active material particles , wherein the conductive material particle has a D50 particle diameter of 10 nm to 2 $\mu$m;
    a first binder having an average particle diameter of 40 nm to 100 nm, which is distributed between the conductive material particles and between the conductive material particles and the current collector, wherein 60% by weight or more of the first binder, based on a total weight of the first binder, is distributed on the surface part of the conductive material particles, wherein the surface part is a part from the conductive material particle surface to 1 $\mu$m in the vertical direction, wherein the surface part is measured as disclosed in the specification; and
    a second binder having an average particle diameter of 150 nm to 600 nm, which is distributed between the electrode active material particles and the conductive material particles, and between the electrode active material particles and the current collector, wherein 60% by weight or more of the second binder, based on a total weight of the second binder, is distributed on the surface part of the electrode active material particles, wherein the surface part is a part from the electrode active material particle surface to 1 $\mu$m in the vertical direction, wherein the surface part is measured as disclosed in the specification,
    wherein both the first binder and the second binder are a styrene-butadiene-acrylic polymer,
    wherein a weight ratio of the first binder and the second binder is 1:2 to 1:20,
    wherein the particle diameter is measured as disclosed in the specification.

2. The electrode for a secondary battery of claim 1, wherein the electrode is a negative electrode.

3. A method of manufacturing an electrode for a secondary battery according to claim 1, the method comprising:

preparing a conductive material dispersion by mixing a first binder with a conductive material;
preparing an active material slurry composition by mixing the conductive material dispersion with a second binder and an electrode active material; and
obtaining the electrode by applying the active material slurry composition onto at least one side of a current collector, followed by drying and rolling.

4. The method of manufacturing an electrode for a secondary battery of claim 3, wherein the first binder and the second binder are each independently prepared by including the step of a process comprising polymerizing monomers in the presence of an emulsifier, a polymerization initiator, and a solvent.

5. The method of manufacturing an electrode for a secondary battery of claim 4, wherein, when the first binder is prepared, the content of a emulsifier in the total amount of a monomer, the emulsifier, the polymerization initiator, and the solvent is further increased, as compared with the second binder.

6. The method of manufacturing an electrode for a secondary battery of claim 4, wherein the monomer includes butadiene; styrene; and acrylic acid.

7. A secondary battery comprising the electrode of claim 1.

**Patentansprüche**

1. Elektrode für eine Sekundärbatterie, wobei eine Elektrodenmischungsschicht auf mindestens einer Seite eines Stromabnehmers gebildet ist, wobei die Elektrodenmischungsschicht umfasst:

eine Vielzahl von Elektrodenaktivmaterialteilchen, wobei das Elektrodenaktivmaterialteilchen einen D50-Teilchendurchmesser von 500 nm bis 50 μm aufweist;
eine Vielzahl von leitfähigen Materialteilchen, die zwischen den Elektrodenaktivmaterialteilchen verteilt sind, wobei das leitfähige Materialteilchen einen D50-Teilchendurchmesser von 10 nm bis 2 μm aufweist;
ein erstes Bindemittel mit einem durchschnittlichen Teilchendurchmesser von 40 nm bis 100 nm, das zwischen den leitfähigen Materialteilchen und zwischen den leitfähigen Materialteilchen und dem Stromabnehmer verteilt ist, wobei 60 Gew.-% oder mehr des ersten Bindemittels, bezogen auf ein Gesamtgewicht des ersten Bindemittels, auf dem Oberflächenteil der leitfähigen Materialteilchen verteilt sind, wobei der Oberflächenteil ein Teil von der leitfähigen Materialteilchenoberfläche bis 1 μm in der vertikalen Richtung ist, wobei der Oberflächenteil wie in der Beschreibung offenbart gemessen wird; und
ein zweites Bindemittel mit einem durchschnittlichen Teilchendurchmesser von 150 nm bis 600 nm, das zwischen den Elektrodenaktivmaterialteilchen und den leitfähigen Materialteilchen und zwischen den Elektrodenaktivmaterialteilchen und dem Stromabnehmer verteilt ist, wobei 60 Gew.-% oder mehr des zweiten Bindemittels, bezogen auf ein Gesamtgewicht des zweiten Bindemittels, auf dem Oberflächenteil der Elektrodenaktivmaterialteilchen verteilt sind, wobei der Oberflächenteil ein Teil von der Elektrodenaktivmaterialteilchenoberfläche bis 1 μm in der vertikalen Richtung ist, wobei der Oberflächenteil wie in der Beschreibung offenbart gemessen wird,
wobei sowohl das erste Bindemittel als auch das zweite Bindemittel ein StyrolButadien-Acryl-Polymer sind,
wobei ein Gewichtsverhältnis des ersten Bindemittels und des zweiten Bindemittels 1:2 bis 1:20 beträgt,
wobei der Teilchendurchmesser wie in der Beschreibung offenbart gemessen wird.

2. Elektrode für eine Sekundärbatterie nach Anspruch 1, wobei die Elektrode eine negative Elektrode ist.

3. Verfahren zur Herstellung einer Elektrode für eine Sekundärbatterie nach Anspruch 1, wobei das Verfahren umfasst:

Herstellen einer leitfähigen Materialdispersion durch Mischen eines ersten Bindemittels mit einem leitfähigen Material;
Herstellen einer Aktivmaterialaufschlämmungszusammensetzung durch Mischen der leitfähigen Materialdispersion mit einem zweiten Bindemittel und einem Elektrodenaktivmaterial; und

Erhalten der Elektrode durch Aufbringen der Aktivmaterialaufschlämmungszusammensetzung auf mindestens eine Seite eines Stromabnehmers, gefolgt von Trocknen und Walzen.

**4.** Verfahren zur Herstellung einer Elektrode für eine Sekundärbatterie nach Anspruch 3, wobei das erste Bindemittel und das zweite Bindemittel jeweils unabhängig hergestellt werden, indem der Schritt eines Verfahrens eingeschlossen wird, das Polymerisieren von Monomeren in Gegenwart eines Emulgators, eines Polymerisationsinitiators und eines Lösungsmittels umfasst.

**5.** Verfahren zur Herstellung einer Elektrode für eine Sekundärbatterie nach Anspruch 4, wobei, wenn das erste Bindemittel hergestellt wird, der Gehalt eines Emulgators in der Gesamtmenge eines Monomers, des Emulgators, des Polymerisationsinitiators und des Lösungsmittels im Vergleich zu dem zweiten Bindemittel weiter erhöht wird.

**6.** Verfahren zur Herstellung einer Elektrode für eine Sekundärbatterie nach Anspruch 4, wobei das Monomer Butadien; Styrol; und Acrylsäure einschließt.

**7.** Sekundärbatterie, umfassend die Elektrode nach Anspruch 1.


**Revendications**

**1.** Électrode pour une batterie secondaire, dans laquelle une couche de mélange d'électrodes est formée sur au moins un côté d'un collecteur de courant, la couche de mélange d'électrodes comprenant:

une pluralité de particules de matériau actif d'électrode, la particule de matériau actif d'électrode ayant un diamètre de particule D50 de 500 nm et 50 $\mu$m;
plusieurs particules de matériau conducteur réparties entre les particules de matériau actif de l'électrode, les particules de matériau conducteur ayant un diamètre D50 de 10 nm et 2 $\mu$m;
un premier liant ayant un diamètre de particule moyen de 40 nm à 100 nm, qui est distribué entre les particules de matériau conducteur et entre les particules de matériau conducteur et le collecteur de courant, dans lequel 60 % en poids ou plus du premier liant, sur la base d'un poids total du premier liant, est distribué sur la partie surface des particules de matériau conducteur, la partie surface est une partie allant de la surface des particules de matériau actif d'électrode à 1 $\mu$m dans la direction verticale, la partie surface est mesurée comme indiqué dans la spécification; et
un second liant ayant un diamètre moyen de 150 nm à 600 nm, réparti entre les particules de matériau actif d'électrode et les particules de matériau conducteur, et entre les particules de matériau actif d'électrode et le collecteur de courant, dans lequel 60 % en poids ou plus du second liant, par rapport au poids total du second liant, est distribué sur la partie surface des particules de matériau actif d'électrode, la partie surface étant une partie allant de la surface des particules de matériau actif d'électrode à 1 $\mu$m dans la direction verticale, la partie surface étant mesurée comme indiqué dans la présente spécification,
le premier liant et le second liant sont tous deux des polymères styrène-butadiène-acrylique,
le rapport en poids entre le premier liant et le second liant est compris entre 1:2 et 1:20,
le diamètre des particules est mesuré comme indiqué dans la spécification.

**2.** Électrode pour une batterie secondaire de la revendication 1, dans laquelle l'électrode est une électrode négative.

**3.** Méthode de fabrication d'une électrode pour une batterie secondaire selon la revendication 1, la méthode comprenant:

préparer une dispersion de matériau conducteur en mélangeant un premier liant avec un matériau conducteur;
préparer une composition de boue de matériau actif en mélangeant la dispersion de matériau conducteur avec un second liant et un matériau actif d'électrode; et
obtenir l'électrode en appliquant la composition de boue de matière actif sur au moins une face d'un collecteur de courant, suivi d'un séchage et d'un roulage.

**4.** Procédé de fabrication d'une électrode pour batterie secondaire selon la revendication 3, dans lequel le premier liant et le second liant sont chacun préparés indépendamment en incluant l'étape d'un procédé comprenant la polymérisation de monomères en présence d'un émulsifiant, d'un initiateur de polymérisation et d'un solvant.

**5.** Procédé de fabrication d'une électrode pour batterie secondaire selon la revendication 4, dans lequel, lors de la préparation du premier liant, la teneur en émulsifiant dans la quantité totale de monomère, d'émulsifiant, d'initiateur de polymérisation et de solvant est encore augmentée par rapport au deuxième liant.

**6.** Procédé de fabrication d'une électrode pour une batterie secondaire selon la revendication 4, dans lequel le monomère comprend le butadiène, le styrène et l'acide acrylique.

**7.** Batterie secondaire comprenant l'électrode de la revendication 1.

FIG. 1

FIG. 2

FIG. 3

FIG. 4

FIG. 5

SU8000 2.0kV 4.5mm x1.00k LA20(U)    50.0um

FIG. 6

**REFERENCES CITED IN THE DESCRIPTION**

**Patent documents cited in the description**

- US 2016233512 A1
- KR 20160083718 A
- US 2005198815 A1
- JP 2012156061 A
- KR 1020080005527